# EUROPEAN PATENT APPLICATION

(11) **EP 4 309 764 A1**
(43) Date of publication of application: **24.01.2024**
(21) Application number: 22020351.7
(22) Date of filing: 21.07.2022
(51) Int. Cl.: B01D 53/04

(54) **PROCESS AND APPARATUS FOR REMOVING COMPONENTS FROM A FEED GAS MIXTURE**

(71) Applicant: Linde GmbH, 82049 Pullach (DE)
(72) Inventor: Grahl, Matthias, 82049 Pullach (DE); Voss, Christian, 82049 Pullach (DE); Duarte, Gabriel Salazar, 82049 Pullach (DE); Hentschel, Harald, 82049 Pullach (DE)
(74) Representative: Lu, Jing

(57) **Abstract**

The invention relates to a process (100) for removing components from a feed gas mixture (F) using a temperature swing adsorption unit (10) and a cryogenic unit (50), the temperature swing adsorption unit (10) comprising at least three adsorption vessels (11-13) and the cryogenic unit (50) being used to cool at least a part of a gas mixture formed in the temperature swing adsorption unit (10) to a cryogenic temperature, the process (100) comprising cyclically operating the temperature swing adsorption unit (10) in at least three successive operation states in each of which at least one of the adsorption vessels (11-13) is operated in an adsorption mode by passing an adsorption gas stream (A) therethrough, at least one of the adsorption vessels (11-13) is operated in a heating mode by passing a heating gas stream (H) therethrough, and at least one of the adsorption vessels (11-13) is operated in a cooling mode by passing a cooling gas stream (C) therethrough, each of the adsorption vessels (11-13) being successively operated in the adsorption mode, the heating mode, and the cooling mode in the successive operation states. It is provided that that the cooling gas stream (C) is formed by a first part of the feed gas mixture (F), the heating gas stream (H) is formed by the cooling gas stream (C) having been passed through the at least one of the adsorption vessels (11-13) operated in the cooling mode, or a part thereof, and the adsorption gas stream (A) is formed using a second part of the feed gas mixture (F) and the heating gas stream (H) having been passed through the at least one of the adsorption vessels (11-13) operated in the heating mode, or a part thereof, wherein the cooling gas stream (C) having been passed through the at least one of the adsorption vessels (11-13) operated in the cooling mode, or the part thereof used in forming the heating gas stream, is heated during at least a major part of a duration of the heating mode. A corresponding apparatus is also part of the present invention.

## Description

The present invention relates to a process for removing components from a feed gas mixture, particularly for removing heavy hydrocarbons from a hydrocarbon-rich feed gas mixture, particularly from natural gas, and to a corresponding apparatus according to the preambles of the independent claims.

### Background of the invention

As generally known and as e.g. described in US 2015/308734 A1 of the present applicant, liquefaction and subcooling of hydrocarbon-rich gas mixtures like natural gas is typically performed using at least one pure refrigerant cycle and/or at least one mixed refrigerant cycle. In the context of gas liquefaction, clogging of process equipment, which can be caused by solidification ("freezing") of certain components, particularly of so-called heavy hydrocarbons, must be avoided.

In the field of natural gas liquefaction, heavy hydrocarbons are generally defined as hydrocarbons comprising six or more carbon atoms such as hexanes and higher, and these may also include, according to the definition used herein, hydrocarbons with five carbon atoms. Heavy hydrocarbons typically also include aromatic compounds, particularly benzene, toluene and xylene (BTX). The present invention particularly relates to the treatment of gas mixtures containing such heavy hydrocarbons besides lighter hydrocarbons, particularly methane. Such gas mixtures may also contain hydrocarbons with two to four carbon atoms, particularly ethane, propane, butane, isobutane, and pentane. The latter are also referred to as natural gas liquids. Hydrocarbons with five carbon atoms may, according to the present invention, be part of (unwanted) heavy hydrocarbons to be removed from a corresponding gas mixture, but they may also be considered to represent hydrocarbons to be transferred into a purified gas mixture, as the case may be.

Particularly, the present invention relates to treatment of natural gas but is not limited thereto. The present invention may be used in the context of other gas mixtures with the same or similar properties as described in connection with hydrocarbon-rich gas. However, the invention may also be used in treating other gas mixtures in which unwanted components are present, particularly mixtures such as air wherein unwanted components may include water and hydrocarbons or mixtures such as synthesis gas from steam reforming where unwanted components may likewise include water, etc. Typically, the unwanted components are condensable without using cryogenic temperatures. Gas mixtures may also include carbon dioxide as an unwanted component which may be removed using other means such as physical or chemical scrubbing technologies and the like at an appropriate position of the process.

Generally, the present invention is usable in all applications where a gas mixture comprises components that may be removed by adsorption processes. Only for illustration purposes, the further description will focus on hydrocarbon-rich gas mixtures. For example, the purification of air to be processed in a cryogenic air separation unit, including a removal of water and carbon dioxide by adsorption using zeolithes, is described in H.-W. Haring (Ed.), Industrial Gases Processing, Wiley-VCH, 2006, particulary Section 2.2.5, "Cryogenic Rectification".

While unwanted components such as water may typically be removed from hydrocarbon-rich gas mixtures to be liquefied, if present, at ambient temperatures to a sufficient extent, heavy hydrocarbons are classically removed by subjecting the gas mixture to be liquefied to an initial partial condensation, causing heavy hydrocarbons to liquefy. These heavy hydrocarbons are then removed as a heavy hydrocarbon fraction.

Such a partial condensation as described can be realized with different process steps such as refrigeration, expansion, absorption or, particularly in natural gas treatment, cryogenic absorption. If the hydrocarbon-rich gas mixture to be liquefied comprises a sufficiently high content of components with an intermediate boiling range, for example propane, butane and/or pentane, which during cooling of the gas mixture also undergo a sufficient liquefaction and thus effectively act as a solvent for the heavy hydrocarbons to be removed. Particularly in so-called lean natural gas, such components are only present in small amounts, and a sufficient depletion by partial condensation via cryogenic absorption is generally not possible. For several reasons, processes including an adsorptive removal of heavy hydrocarbons from hydrocarbon-rich gas mixtures have been proposed as an alternative to partial condensation, particularly for treating lean natural gases.

For example, WO 2013/116627 A1 discloses a process for removing heavy hydrocarbons from a natural gas stream which comprises passing the natural gas stream through a temperature swing adsorption unit to adsorb heavy hydrocarbons and water, regenerating the temperature swing adsorbent by heating to form a contaminated gas phase, cooling the contaminated gas phase to separate water and heavy hydrocarbon liquids to form a third gas phase, and directing the third gas phase to a pressure swing adsorption unit to adsorb heavy hydrocarbons from the third gas phase. The product from the pressure swing adsorption unit can be sent to a pipeline or recycled to the temperature swing adsorption unit. WO 2021/213699 A1 discloses a further process including temperature swing adsorption.

It is an object of the present invention to increase the efficiency of removing components from feed gas mixtures using temperature swing adsorption.

### Disclosure of the invention

Against this background, the present invention proposes a process for removing components from a feed gas mixture, particularly for removing heavy hydrocarbons from a hydrocarbon-rich gas mixture, particularly from natural gas, and corresponding apparatus comprising the features of the independent claims. Advantageous embodiments of the present invention are the subject of the dependent claims and of the description that follows.

In the terminology used herein, liquids and gases may be enriched or depleted in one or more components, these terms referring to a content in a liquid or gas from which the liquid or gas under consideration was obtained. The liquid or gas is enriched if it contains at least 1.1 times, 1.5 times, 2 times, 5 times, 10 times, 100 times or 1000 times the content, and depleted if it contains at most 0.9 times, 0.5 times, 0.1 times, 0.01 times or 0.001 times the content of a corresponding component, relative to the liquid or gas it was derived from.

The present application may use the terms pressure level and temperature level to characterise pressures and temperatures, the purpose of which is to express that pressures and temperatures need not be used in the form of exact pressure or temperature values in order to realise the inventive concept. However, such pressures and temperatures are typically within certain ranges around an average or set value. Corresponding pressure levels and temperature levels may be in disjoint ranges or in ranges that overlap. In particular, pressure levels include unavoidable pressure losses. The same applies to temperature levels. The pressure levels indicated here in bar are absolute pressures. For example, a feed gas mixture treated according to the present invention may be provided at a pressure level in a range of e.g. 20 to 100 bar (abs.), with a fluctuation margin of e.g. up to 5 bar.

A feature of the present invention is using an advanced process scheme including using a part of the feed gas mixture for regeneration as well, i.e. for heating and cooling adsorption vessels, thus improving overall efficiency. This has, contrary to previous expectations, been found to be suitable in a method wherein a subsequent cryogenic treatment or separation is performed. In such cases, conventional methods include using a layered bed and to regenerate with treated gas, since there is the fear of not being able to reach the cryogenic specification (regarding water) otherwise. This leads to the need of rotating equipment and the increase of the hydraulic duty of the vessels, increasing capital expenses. According to the invention, where feed instead of treated gas as cooling gas is used, however, cryogenic specifications in the treated gas can still be reached. Advantages thereof include that rotating equipment is not needed and hydraulic duty of the vessels can be reduced. This reduces capital expenses.

Temperature swing adsorption (TSA) is, as generally known, an adsorptive process for the separation of gas mixtures in which the adsorbent used is regenerated using thermal energy. Temperature swing adsorption is used, for example, for waste gas purification or for processing gas mixtures such as, like in embodiments of the present invention, natural or synthesis gas. Other gas mixtures can also be separated in a corresponding manner by means of thermal swing adsorption, for example gas mixtures such as biogas or waste gases from chemical or physical gas scrubbing processes such as rectisol or amine scrubbing, provided that their composition is suitable for the separation. The present invention is not limited to the use of certain adsorbents or gas mixtures. Examples of gas mixtures treatable accordingly were already given above and will further be described below.

Temperature swing adsorption makes use of the temperature dependence of adsorption processes. For adsorbing certain components of a gas mixture, a stream formed from the gas mixture, which hereinafter is referred to as an "adsorption gas stream", is passed through an adsorbent accommodated in a container which hereinafter is referred to as an "adsorption vessel". This is done at a lower temperature level in an operating mode also referred to as an "adsorption mode" with respect to the specific adsorption vessel. As a consequence, the adsorbent is loaded with the adsorbing components to be separated from adsorption gas stream. In a subsequent operating cycle, the adsorbent is regenerated by desorbing these components by heating, i.e. by introducing thermal energy. This operating cycle is also referred to as the "heating mode" herein. After the heating phase, the adsorption vessel needs to be cooled, in order to be prepared for being operated in a subsequent adsorption phase, such a mode being referred to as "cooling mode". In the context of the description herein, the heating and cooling modes may be referred to as "regeneration mode" in common. The present invention is not limited by these definitions.

For the continuous operation of a temperature swing adsorption apparatus, at least two adsorption vessels are required, such that the gas mixture to be treated may always be passed through at least one of the adsorption vessels. This does not necessarily mean that there are only phases in which exactly one adsorption vessel is used for adsorption. Rather, phases may be present in which two or more adsorption vessels, particularly in larger arrangements, can be operated in an adsorption mode.

Temperature swing adsorption can be used in particular in systems with components that have high affinities. The cycle times of the explained operating cycles are usually several hours. Temperature swing adsorption is generally used to remove low concentrated components in gas mixtures and is typically less suitable for removing higher concentrated components.

In temperature swing adsorption, in other words, a suitable gas stream which is hereinafter referred to as a "heating gas stream" is passed in the regeneration cycle in heated form directly over the adsorbent. The heating gas stream desorbs and absorbs the components previously adsorbed to the adsorbent. The regeneration gas can classically be a purified process product, for example steam or nitrogen. The use of other regeneration gases is also possible. Subsequent to such a heating phase, a cooling phase is present, in order to prepare the adsorbent for use in subsequent adsorption mode. As mentioned, hereinafter the heating and cooling phases are considered to form part of the regeneration cycle or mode.

The present invention is, as mentioned, used for removing heavy hydrocarbons of the type mentioned, but also of components such as water, upstream of a cryogenic unit, wherein particularly rotating equipment is avoided as well as an increase in the hydrodynamic duty of the vessels.

The term "cryogenic unit" shall refer, in the understanding used herein, to a process component in which a gas mixture is subjected to one or more cooling steps to a final or intermediate temperature between 0 °C and -200 °C, particularly between -50 °C or-100 °C and -150 °C (a "cryogenic temperature"), particularly wherein such a step serves to form one or more condensate fractions from the gas mixture. Temperatures and pressures may e.g. be selected to be below the condensation conditions of one or more of the unwanted components mentioned at the outset.

In embodiments of the invention, the process uses a minimum of three adsorption vessels. While a first vessel is in adsorption mode processing a stream which comprises a part of the feed gas mixture and recirculated regeneration gas (referred to as an "adsorption gas stream" herein), a second vessel is in the cooling mode. During this cooling mode, a further part of feed gas mixture is used as cooling gas ("cooling gas stream"). The effluent gas of said second vessel, which is also depleted of the unwanted components ("heating gas stream"), is used to heat up a third vessel which is in the heating mode. The effluent of said third vessel is then routed back where it is mixed with the part of the feed gas that is not used as cooling gas. The flows may be combined using a valve which adjusts the pressure of said portion of the feed gas mixture. Contrary to solutions according to the prior art, no rotating equipment is used to route the regeneration gas back to mix it with the feed gas mixture. In the prior art case, this regeneration gas consists of a part of the treated gas, which leads to an increase of the hydrodynamic duty of the vessels by x%, where x represents the ratio between regeneration and feed gas and the need for rotating equipment. Such an increase in the hydrodynamic duty and the need for rotating equipment is avoided, as mentioned, using this novel process and/or process scheme. The direction of the regeneration gas in the heating mode is counter-current to the flow during the adsorption mode. The direction of the flow during the cooling mode is co-current to the direction of the flow during adsorption.

In the process according to the present invention, the cryogenic unit is used to cool at least a part of a gas mixture formed in the temperature swing adsorption unit to a cryogenic temperature, such a gas mixture being a "product mixture" of the temperature swing adsorption unit being passed further on to the cryogenic unit, a temperature swing adsorption unit comprising at least three adsorption vessels is used, as mentioned. In one embodiment of the present invention, exactly three adsorption vessels are used as explained hereinbelow, but the present invention is not limited to using exactly three adsorption vessels. At any time, if specific reference is made to "a" or "one" adsorption vessel is used in a certain way, this is not intended to be limiting but may also include more than one adsorption vessel, particularly operated in parallel in each case, unless specifically indicated.

Summarizing the features of embodiments of the invention, a process for removing components from a feed gas mixture using a temperature swing adsorption unit comprising at least three adsorption vessels is provided, the process comprising cyclically operating the temperature swing adsorption unit in at least three successive operation states or modes in each of which at least one of the adsorption vessels is operated in an adsorption mode by passing an adsorption gas stream therethrough (and thus adsorbing said components to be removed to an adsorbent in the vessel), at least one of the adsorption vessels is operated in a heating mode by passing a heating gas stream therethrough (thus desorbing the previously adsorbed components), and at least one of the adsorption vessels is operated in a cooling mode by passing a cooling gas stream therethrough (to prepare the vessel for the subsequent adsorption mode). Each of the adsorption vessels is successively operated in the adsorption mode, the heating mode, and the cooling mode in the successive operation states. Reference is made to the explanations above regarding the meaning of some terms used in defining embodiments of the present invention.

According to embodiments of the present invention, the cooling gas stream is formed by a first part of the feed gas mixture (which has not yet passed through any of the adsorption vessels), the heating gas stream is formed by the cooling gas stream having been passed through the at least one of the adsorption vessels operated in the cooling mode, or a part thereof, and the adsorption gas stream is formed using a second part of the feed gas mixture (which has not yet passed through any of the adsorption vessels), and the heating gas stream having been passed through the at least one of the adsorption vessels operated in the heating mode, or a part thereof, wherein the cooling gas stream having been passed through the at least one of the adsorption vessels operated in the cooling mode, or the part thereof used in forming the heating gas stream, is heated during at least a major part of a duration of the heating mode. According to embodiments of the present invention, the heating gas having been passed through the at least one of the adsorption vessels operated in the heating mode is loaded with heavy hydrocarbons and water and may therefore be cooled down in order to condensate or "knock down" at least a part of the heay hydrocarbons and water contained therein before routing it back and mixing it with the part of the feed gas that will be routed to the at least one of the adsorption vessels operated in the adsorption mode.

According to embodiments of the present invention, the cooling gas stream having been passed through the at least one of the adsorption vessels operated in the cooling mode, or the part thereof used in forming the heating gas stream, is heated during at least 50, 75, 80 or 90% of the duration of the heating mode or during the complete duration of the heating mode. A heater used in this connection may be operated essentially continuously in the latter case.

Embodiments of the present invention include that the cooling gas stream having been passed through the at least one of the adsorption vessels operated in the cooling mode, or the part thereof used in forming the heating gas stream, is heated to 80 to 300 °C during said at least a major part of a duration of the heating mode. Such temperatures may also be varied and are particularly selected in dependence of the adsorption/desorption properties of components to be removed.

In embodiments of the present invention, the feed gas mixture may be natural gas or may be formed from natural gas and the components removed therefrom may be hydrocarbons with at least five or six carbon atoms. In alternative embodiments, the feed gas mixture may be air and the components removed therefrom may include at least one of carbon dioxide, water, and hydrocarbons.

The present invention is, in other words, particularly useful to remove heavy hydrocarbons of the type mentioned particularly from natural gas which optionally was treated by suitable treatment steps such as carbon dioxide removal and so-called sweetening. However, such components, particularly water, can also be removed in the process according to the present invention. Components such as carbon dioxide may either simply be passed through the adsorption steps which are proposed according to the present invention and is therefore not necessarily removed before. It can then be removed in a downstream sink for carbon dioxide, such as an absorption unit. Optionally, carbon dioxide may also be removed upstream and therefore is not passed to the steps according to the invention. The specific way of carbon dioxide removal, if necessary, may particularly depend from the gas mixture treated. For example, a gas mixture like air may be treated differently from a gas mixture such as natural gas.

The gas mixture may particularly contain high amounts of nitrogen. A hydrocarbon- rich feed gas mixture which may be used according to an embodiment of the present invention may particularly contain 0.005 to 4 mol.-%, particularly 0.01 to 2 mol.-%, of said heavy hydrocarbons, including hydrocarbons with optionally five and also six, seven, eight and nine carbon atoms. They may particularly include benzene, toluene and/or xylol, particularly in a content from 0.0005 to 0.2 mol.-%. The gas may further particularly contain more than 10 ppm of water and may especially be saturated with water under the conditions used. The feed gas mixture may contain 5 to 99.995 mol.-%, particularly 20 to 95 mol.-% of said lighter hydrocarbons. Particularly, the hydrocarbon-rich feed gas mixture may contain 0.1 to 99.995 mol.-%, particularly 1 to 95 mol.-%, of methane and/or nitrogen. A content of hydrocarbons with two to four or five carbon atoms, i.e. the lighter hydrocarbons, may particularly be in the range from 0.5 to 20 mol.-%, particularly from 1 to 10 mol.-%, these hydrocarbons particularly including 0.1 to 20 mol.-% of hydrocarbons with two, 0.1 to 20 mol.-% of hydrocarbons with three, 0.1 to 5 mol.-% of hydrocarbons with four, and 0.05 to 2 mol.-% of hydrocarbons with five carbon atoms.

The direction of the heating and cooling gas streams can, in an adsorption arrangement, generally be counter-current or co-current to the direction of the flow during adsorption. In the context of the present invention, however, as a further part of the feed gas is used for regeneration, the direction of the flow during adsorption and regeneration may be co-current, as in this way the feed gas which is used for regeneration and which first contacts the "impure" end of the adsorption bed does not contaminate the "pure" end. In case of a co-current flow for the heating mode, the energy demand during the heating step is constant since the regeneration gas is taken from the feed gas and routed directly to the regeneration gas heater.

In the present invention, just to avoid misunderstandings, the adsorption gas stream is depleted in the components to be removed, such as heavy hydrocarbons and water while being passed through the adsorption vessel operated in the adsorption mode and the heating gas stream is enriched in these components while being passed through the adsorption vessel operated in the regeneration mode. The adsorption gas stream depleted in components such as heavy hydrocarbons and water after having been passed through the adsorption vessel operated in the adsorption mode may later be used e.g. in a liquefaction step or pipeline conditioning step which may form part of the present invention, which thus effectively relates to a method of liquefaction of the feed gas mixture. The heating gas stream which is enriched in the unwanted compounds such as heavy hydrocarbons and is treated as mentioned before and as further described hereinafter. Particularly, it may be recycled as mentioned.

According to embodiments of the present invention, the cooling gas stream having been passed through the at least one of the adsorption vessels operated in the cooling mode, or the part thereof used in forming the heating gas stream, is heated to 80 to 300 °C during said at least a part of a duration of the heating mode.

In embodiments of the present invention, the adsorption vessels include one or more adsorbents selected from zeolites, silica gels, activated alumina, charcoal, promoted adsorbents, and combinations thereof as hybrid adsorbents or metalorganic frameworks (MOF) of any suitable type.

In embodiments of the present invention, the adsorption vessels may each comprise a layered adsorbent bed. Each layered adsorbent bed may particularly be formed from different ones of the adsorbents.

An apparatus for removing components from a feed gas mixture including a temperature swing adsorption unit comprising at least three adsorption vessels is also part of the present invention, wherein the apparatus further comprises a cryogenic unit, wherein the cryogenic unit is configured to cool at least a part of a gas mixture withdrawn from the temperature swing adsorption unit to a cryogenic temperature, and wherein the apparatus is configured to cyclically operate the temperature swing adsorption unit in at least three successive operation states in each of which at least one of the adsorption vessels is operated in an adsorption mode by passing an adsorption gas stream therethrough, at least one of the adsorption vessels is operated in a heating mode by passing a heating gas stream therethrough, and at least one of the adsorption vessels is operated in a cooling mode by passing a cooling gas stream therethrough, and further being configured to successively operate each of the adsorption vessels in the adsorption mode, the heating mode, and the cooling mode in the successive operation states.

According to the present invention, the apparatus is adapted to form the cooling gas stream by a first part of the feed gas mixture, to form the heating gas stream by the cooling gas stream having been passed through the at least one of the adsorption vessels operated in the cooling mode, or a part thereof, and to form the adsorption gas stream using a second part of the feed gas mixture and the heating gas stream having been passed through the at least one of the adsorption vessels operated in the heating mode, or a part thereof, wherein the apparatus is further adapted to heat the cooling gas stream having been passed through the at least one of the adsorption vessels operated in the cooling mode, or the part thereof used in forming the heating gas stream, during at least a major part of a duration of the heating mode. As mentioned above, heavy hydrocarbons and water may be "knocked down" from the heating gas before mixing it with the part of the feed gas that will be routed to the vessel in the adsorption mode.

As to further features and specific advantages of the present invention, reference is made to the explanations of the inventive method and its embodiments above. This also applies to an apparatus according to a particularly preferred embodiment which comprises means adapted to perform a corresponding method.

The present invention is further described with reference to the appended drawings illustrating embodiments of the present invention.

Short description of the Figures
Figure 1 illustrates a process according to a particularly preferred embodiment of the present invention in the form of a simplified process flow diagram.
Figure 2 illustrates operation phases of adsorbing vessels used in the method according to Figure 1 in the form of a diagram.

In the Figures, elements of identical or comparable construction and/or function are indicated with identical reference numerals and are not repeatedly explained for reasons of conciseness. Explanations relating to processes and steps thereof shall equally apply to apparatus adapted to carry out such method.

### Embodiments of the invention

The embodiments of the present invention illustrated hereinbelow are described with reference to a hydrocarbon-rich gas mixture being used as the feed gas mixture, the hydrocarbon-rich gas mixture comprising heavy hydrocarbons with at least five carbon atoms and/or water as the unwanted components. The explanations, however, also apply to other unwanted components and gas mixtures, as mentioned.

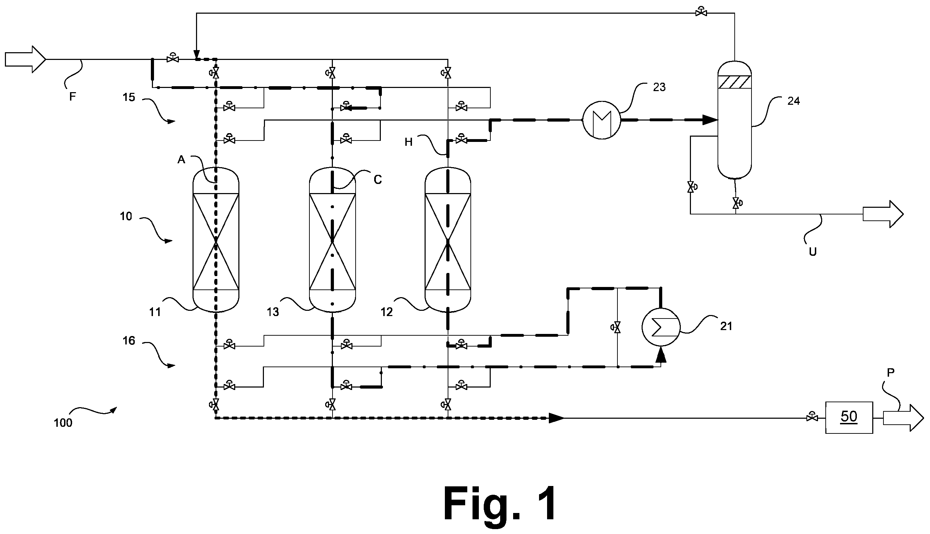

Figure 1 illustrates a process 100 according to an embodiment of the present invention in the form of a simplified process flow diagram.

In the process 100 for removing components from a feed gas mixture F, such as for the removal of heavy hydrocarbons with at least five or six carbon atoms and/or water from a hydrocarbon-rich feed gas mixture, e.g. from pretreated natural gas, a temperature swing adsorption unit 10 comprising at least three adsorption vessels 11, 12 and 13 is used. A cryogenic unit 50 is also provided and is adapted to cool at least a part of a gas mixture formed in the temperature swing adsorption unit 10 to a cryogenic temperature. The adsorption unit 10 is operated in at least three successive operation states in each of which at least one of the adsorption vessels 11, 12, 13 (in the snapshot illustrated in Figure 1, this is vessel 11) is operated in an adsorption mode by passing an adsorption gas stream A (illustrated with a dotted line) therethrough, at least one of the adsorption vessels 11, 12, 13 (in the snapshot illustrated in Figure 1, this is vessel 12) is operated in a heating mode by passing a heating gas stream H (illustrated with a dashed line) therethrough, and at least one of the adsorption vessels 11, 12, 13 (in the snapshot illustrated in Figure 1, this is vessel 13) is operated in a cooling mode by passing a cooling gas stream C (illustrated with a dash-dotted line) therethrough, each of the adsorption vessels 11, 12, 13 being successively operated in the adsorption mode, the heating mode, and the cooling mode in the successive operation states, which can be switched by operating the valve arrangements 15, 16 illustrated.

As illustrated in Figure 1, the cooling gas stream C is formed by a first part of the feed gas mixture F. The heating gas stream H is formed by the cooling gas stream C having been passed through the adsorption vessel 13 operated in the cooling mode and after having been heated in a heater 21. The adsorption gas stream A is formed using a second part of the feed gas mixture F and a part of the heating gas stream H having been passed through the adsorption vessel 12 operated in the heating mode. More specifically, the heating gas stream H is, after having been passed through the adsorption vessel 12 being passed through a heat exchanger and thereafter being fed into a condenser 24 where a stream of unwanted components U is removed. The remainder is recycled to form the adsorption gas stream A. After having been passed through adsorption vessel 11, the adsorption gas stream A depleted in the unwanted components is used to form a product stream P.

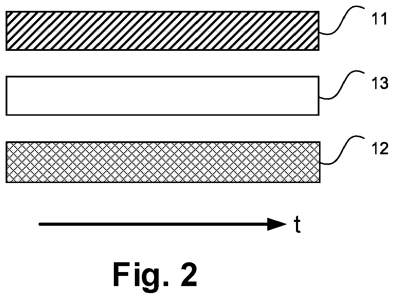

Figure 2 illustrates operation phases of adsorbing vessels 11, 12, 13 used in the method according to Figure 1 in the form of a diagram, where the same reference numerals for the adsorption vessels 11, 12 and 13 are used and the operating conditions or states are depicted in the form of bar diagrams over a horizontal time axis t. As can be seen, the adsorption vessel 11 is in adsorption mode (illustrated as hatched region) while the adsorption vessel 12 is in a heating mode ( cross-hatched bar) and adsorption vessel 13 is in a cooling phase (unfilled bar). Be it known that the method according to an embodiment of the invention includes cyclically switching the operation conditions, states or modes for the adsorption vessels 11, 12 and 13.

As mentioned, the cooling gas stream C having been passed through the adsorption vessel 13 operated in the cooling mode, or the part thereof used in forming the heating gas stream, is heated during at least a major part of a duration of the heating mode, as indicated by the cross-hatched region.

## Claims

1. A process (100) for removing components from a feed gas mixture (F) using a temperature swing adsorption unit (10) and a cryogenic unit (50), the temperature swing adsorption unit (10) comprising at least three adsorption vessels (11-13) and the cryogenic unit (50) being used to cool at least a part of a gas mixture formed in the temperature swing adsorption unit (10) to a cryogenic temperature, the process (100) comprising cyclically operating the temperature swing adsorption unit (10) in at least three successive operation modes in each of which at least one of the adsorption vessels (11-13) is operated in an adsorption mode by passing an adsorption gas stream (A) therethrough, at least one of the adsorption vessels (11-13) is operated in a heating mode by passing a heating gas stream (H) therethrough, and at least one of the adsorption vessels (11-13) is operated in a cooling mode by passing a cooling gas stream (C) therethrough, each of the adsorption vessels (11-13) being successively operated in the adsorption mode, the heating mode, and the cooling mode in the successive operation states, **characterized in that** the cooling gas stream (C) is formed by a first part of the feed gas mixture (F), the heating gas stream (H) is formed by the cooling gas stream (C) having been passed through the at least one of the adsorption vessels (11-13) operated in the cooling mode, or a part thereof, and the adsorption gas stream (A) is formed using a second part of the feed gas mixture (F) and the heating gas stream (H) having been passed through the at least one of the adsorption vessels (11-13) operated in the heating mode, or a part thereof, wherein the cooling gas stream (C) having been passed through the at least one of the adsorption vessels (11-13) operated in the cooling mode, or the part thereof used in forming the heating gas stream, is heated during at least a major part of a duration of the heating mode.

2. The process (100) according to claim 1, wherein the cooling gas stream (C) having been passed through the at least one of the adsorption vessels (11-13) operated in the cooling mode, or the part thereof used in forming the heating gas stream, is heated during at least 50, 75, 80 or 90% of the duration of the heating mode or during the complete duration of the heating mode.

3. The process (100) according to claim 1 or 2, wherein the feed gas mixture (F) is natural gas or formed from natural gas and wherein the components removed therefrom are hydrocarbons with at least five or six carbon atoms and/or water.

4. The process (100) according to claim 1 or 2, wherein the feed gas mixture (F) is air and the components removed therefrom include at least one of carbon dioxide, water, and hydrocarbons.

5. The process (100) according to any one of the preceding claims, wherein the cooling gas stream (C) having been passed through the at least one of the adsorption vessels (11-13) operated in the cooling mode, or the part thereof used in forming the heating gas stream, is heated to 80 to 300 °C during said at least a major part of a duration of the heating mode.

6. The process (100) according to any one of the preceding claims, wherein the adsorption vessels (11-13) include one or more adsorbents selected from zeolites, silica gels, activated alumina, charcoal, promoted adsorbents, metalorganic frameworks and combinations thereof as hybrid adsorbents.

7. The process (100) according to claim 6, wherein the adsorption vessels (11-13) each comprise a layered adsorbent bed.

8. The process (100) according to claim 7, wherein each layered adsorbent bed is formed from different ones of the adsorbents.

9. An apparatus for removing components from a feed gas mixture (F) including a temperature swing adsorption unit (10) and a cryogenic unit (50), the temperature swing adsorption unit (10) comprising at least three adsorption vessels (11-13), the the cryogenic unit (50) being configured to cool at least a part of a gas mixture formed in the temperature swing adsorption unit (10) to a cryogenic temperature, and the apparatus being configured to cyclically operate the temperature swing adsorption unit (10) in at least three successive operation states in each of which at least one of the adsorption vessels (11-13) is operated in an adsorption mode by passing an adsorption gas stream (A) therethrough, at least one of the adsorption vessels (11-13) is operated in a heating mode by passing a heating gas stream (H) therethrough, and at least one of the adsorption vessels (11-13) is operated in a cooling mode by passing a cooling gas stream (C) therethrough, and further being configured to successively operate each of the adsorption vessels (11-13) in the adsorption mode, the heating mode, and the cooling mode in the successive operation states, **characterized in that** the apparatus is adapted to form the cooling gas stream (C) by a first part of the feed gas mixture (F), to form the heating gas stream (H) by the cooling gas stream (C) having been passed through the at least one of the adsorption vessels (11-13) operated in the cooling mode, or a part thereof, and to form the adsorption gas stream (A) using a second part of the feed gas mixture (F) and the heating gas stream (H) having been passed through the at least one of the adsorption vessels (11-13) operated in the heating mode, or a part thereof, wherein the apparatus is further adapted to heat the cooling gas stream (C) having been passed through the at least one of the adsorption vessels (11-13) operated in the cooling mode, or the part thereof used in forming the heating gas stream, during at least a major part of a duration of the heating mode.

10. The apparatus according to claim 9 configured to perform a method according to any one of claims 1 to 8.
